(19) Europäisches Patentamt
European Patent Office
Office européen des brevets

(11) Publication number: **0 098 392**
**B1**

(12) # EUROPEAN PATENT SPECIFICATION

(45) Date of publication of patent specification: **09.12.87**

(51) Int. Cl.[4]: **B 01 D 13/04,** A 61 M 1/34

(21) Application number: **83105534.8**

(22) Date of filing: **06.06.83**

(54) **Filtration membrane and process for producing the membrane.**

(30) Priority: **02.07.82 SE 8204103**

(43) Date of publication of application:
**18.01.84 Bulletin 84/03**

(45) Publication of the grant of the patent:
**09.12.87 Bulletin 87/50**

(84) Designated Contracting States:
**AT BE CH DE FR GB IT LI LU NL**

(56) References cited:
**DE-A-2 827 012**
**DE-A-2 829 630**
**DE-A-2 921 138**
**US-A-4 181 694**
**US-A-4 229 291**

**JOURNAL OF APPLIED POLYMER SCIENCE, vol. 21, 1977 I. CABASSO et al. "Porosity and pore size determination in polysulfone hollow fibers", pages 1883-1900**

(73) Proprietor: **GAMBRO DIALYSATOREN K.G.**
**Postfach 1323**
**D-7450 Hechingen (DE)**

(73) Proprietor: **Gambro Lundia AB**
**Box 10101**
**S-220 10 Lund (SE)**

(72) Inventor: **Göhl, Hermann Joseph**
**Ganswies 8**
**D-7457 Bisingen-Zimmern (DE)**
Inventor: **Geiling, Günther Friedrich**
**Lenauweg 2**
**D-7450 Hechingen (DE)**
Inventor: **Mayer, Georg Bernhard**
**Im Egert 18**
**D-7450 Hechingen-Boll (DE)**
Inventor: **Gullberg, Claes-Ake**
**Höstagillesvägen 32**
**S-222 51 Lund (SE)**

(74) Representative: **Boberg, Nils Gunnar Erik**
**Gambro AB Patent Department Box 10101**
**S-220 10 Lund (SE)**

**EP 0 098 392 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Technical Field

This invention relates to a filtration membrane in the form of a hollow fiber and being made of polyamide, which is especially, though not exclusively, adapted for use in hemofiltration.

Furthermore, the invention relates to a process for producing a membrane of this type, in which a polymer solution of said polyamide is extruded with a center liquid to form a membrane extrudate which is then optionally washed.

It should be clarified that even though the present membrane is especially well adapted for use in hemofiltration, it is not restricted to such an application.. It could as well be used in other filtration procedures requiring high flow-through rates such as for example filtration of infusion solutions as it to a large extent rejects endotoxins and pyrogens and most certainly bacteria and vira. For illustrative purposes only, the following description of the invention will however be concentrated to the former application.

Background to the Invention

Hemofiltration membranes are well known in the art. For example, in the US—A— 4 229 291 there is described a polyamide hemofiltration membrane as well as a process for producing the membrane. A similar membrane is described also in DE—B 22 36 226. Hemofiltration membranes made of other polymers than polyamide are also known and commercially available. Examples are membranes made of cellulose nitrate (Sartorius; Daicel), polyacrylonitrile (Asahi US—A 4 181 694; Rhone-Poulec AN69) polysulphone (Amicon), and polyether-polycarbonate block copolymer (EP—A 0 046 816).

A common drawback for many of these known membranes is their relatively low ultrafiltration rates (permeabilities to water), which require that compensating relatively large membrane surface areas are used to obtain at least a minimal required liquid flow-through when the membranes are used in for example hemofiltration. Since the minimal required flow-through is even higher in the filtration of infusion solutions an accordingly larger compensating membrane surface area must therefore be used. To illustrate this, it may be mentioned that a known filtration membrane according to either of US—A— 4 229 291 and DE—B 22 36 226, which has an ultrafiltration rate of 0.1—0.2 x $10^{-4}$ ml/s x $cm^2$ x kPa and 0.1—0.3 x $10^{-4}$ ml/s x $cm^2$ x kPa, respectively, will need an available membrane surface area of at least 0.5—1 $m^2$ to be able to filtrate the required 100—200 ml/min of infustion solution at a transmembrane pressure of 13—40 kPa.

Another drawback is that the biocompatability of those known membranes is so different from membrane to membrane. We have however found that polyamide membranes and especially a polyamide membrane defined more in detail in the following have very good properties from the biocompatibility point of view. Furthermore, we have found that the ultrafiltration rate can be well controlled, if the membrane is made in the form of a hollow fiber.

An object of this invention is therefore to provide a polyamide filtration membrane which has a good biocompatibility at the same time as it is far better than most of the known filtration membranes as regards the ability to filtrate liquids at high rates. An especial object is to provide a hemofiltration membrane which in comparison to the known filtration membranes requires only a minimum of compensating surface area to be able to filtrate for example blood at the required flow-through rate.

A further object of the invention is to provide a process for producing the above-mentioned improved membrane according to this invention.

These objects are achieved in accordance with the present invention by means of the membrane and the process as defined in the following claims.

Brief Description of the Invention

In accordance with the present invention there is thus provided a filtration membrane in the form of a hollow fiber and being made of a polyamide, particularly for use in hemofiltration. Said membrane is characterized by having an ultrafiltration rate (permeability to water) of between 2 × $10^{-4}$ and 5 × $10^{-4}$ ml/ s × $cm^2$ × kPa (at 20°C) and by being essentially impermeable to Ov-albumin ($M_w$ 44,000), the inner diameter to wall thickness ratio being within the range of from 220:75 to 280:75.

Furthermore, there is provided a process for producing said filtration membrane in the form of a hollow fiber of a polyamide material, wherein a polymer solution of said polyamide is extruded with a center liquid to form a membrane extrudate which is then optionally washed. Said process is characterized in that said polymer solution has a viscosity from 100 to 3000 mPa· s preferably 300 mPa· s as measured at 20°C, and in that said polymer solution is extruded under conditions such that the volume of polymer solution to volume of center liquid ratio is within the range of 1.4—4.

Detailed Description of the Invention

The object of the present invention is an asymmetric, self-supporting membrane in the form of a hollow fiber and being made of a polyamide.

In general, a membrane can be used for hemofiltration if it fulfills the following criteria: non-toxicity, blood compatibility, low tendency for the adsorption of proteins, sharp cut-off, high filtration rates and physical stability. For all these parameters the chemical composition of the membrane material is a major

factor, because it greatly influences the membrane structure and it also determines the interaction between blood and membrane.

According to the present invention it has been found that polyamide membrane materials fulfill all of said criteria and that such materials are soluble in a polar, non-protonic organic solvent. Examples of such solvents are dimethylsulphoxide (DMSO), dimethylformamide (DMF), and dimethylacetate (DMAc).

An example of an especially preferred polyamide according to the present invention is a polyamide having repeating units of the following chemical formula:

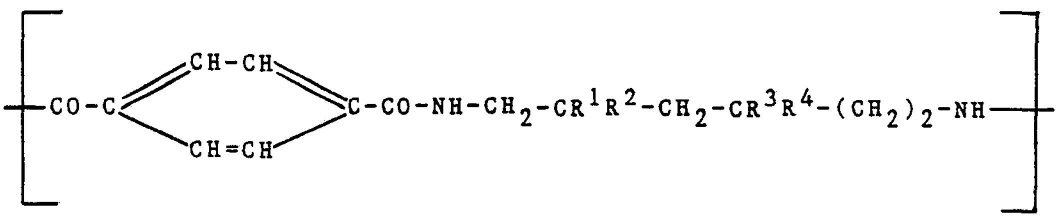

wherein $R^1$ is designating hydrogen and $R^2$, $R^3$ and $R^4$ each are designating a $(C_1—C_5)$alkyl group, preferably methyl or wherein $R^3$ is designating hydrogen and $R^1$, $R^2$ and $R^4$ each are designating a $(C_1—C_5)$alkyl group, preferably methyl.

The wall thickness of the membrane may vary, but is preferably within the range of from 40 to 100 µm with an inner barrier layer of ca 0.1 µm. The cut-off of the membrane is about 30,000 Daltons.

According to the present invention a membrane of the above-mentioned type is produced by extruding a polymer solution with a center liquid under conditions such that the volume of polymer solution to volume of center liquid ratio is within the range of from 1.4—4.

Under said process condition it has furthermore been found that an optimum of the membrane characteristics will be obtained, when for example the following two further process conditions are properly adjusted to each other, namely the inner diameter to wall thickness ratio of the hollow fiber membrane and the polymer concentration of the polymer solution.

According to the present invention said inner diameter to wall thickness ratio may vary within the range of from 220:75 to 280:75.

Similarly, said polymer concentration may vary within the range of from 5 to 20%. A polymer concentration outside this range will lead to a membrane which is either too rubbery or which is being inferior as regards the ultrafiltration characteristics. An especially preferred polymer concentration is 11%.

To illustrate the importance of properly adjusting said two further process conditions to each other, when using a volume of polymer solution to volume to center liquid ratio within the above-mentioned range of from 1.4 to 4, reference is made to the accompanying figure. In this figure there is shown a graph which as an example is representing the variation of ultrafiltration rate in dependence on the variation of inner diameter to wall thickness ratio. In the shown example the wall thickness is invariable (75 µm) and the used polymer concentration is 11%.

From this illustrated example it can be seen that an increasing of the inner diameter to wall thickness ratio — at an invariable wall thickness — the ultrafiltration rate of the hollow fiber membrane is increasing. In the illustrated inner diameter to wall thickness of ratio of 2—4 said ultrafiltration rate is increasing along a straight line.

Furthermore, it has been found that with increasing ultrafiltration rate within the illustrated range the cut-off of the membrane is not (as was expected) increasing to higher cut-off values, but is rather invariably fixed at about 30,000 Daltons. Furthermore, it was found that the membrane characteristics as regards the cut-off were uniform at higher inner diameter:wall thickness ratios.

The above illustrated unexpected phenomena could be explained thereby that at higher inner diameter to wall thickness ratios more precipitating agent, as calculated with reference to the polymer concentration, is available and that the polymer solution therefore will precipitate more rapidly. This will lead to a more uniform inner barrier layer of the membrane wall structure. It is known in the art that the pore size, pore distribution and occurrence in the barrier layer have influences on the cut-off value and the ultrafiltration characteristics of the membrane. Within the present inner diameter to wall thickness ratio is apparently obtained a very high occurrence and uniformity of the inner barrier layer.

It has for example been found that at an inner diameter to wall thickness ratio of 220:75 and a polymer concentration of 11% the maximal ultrafiltration rates (up to $2,2 \times 10^{-4}$ ml/s $\times$ $cm^2$ $\times$ kPa and simultaneously good retention capability for high molecular weight proteins can be obtained. One provision for the high-permeable membranes in the extrusion process is that the polymer solution after leaving the die and before reaching a first wash bath is completely exchanged by the center liquid from inside of the hollow fiber, i.e. the residence time in the ambient atmosphere before the hollow fiber extrudate reaches said first wash bath must involve a minimum of time and the distance between the die and the wash bath must be at least a minimal distance.

For example, when said distance between the die and the wash bath is at least 1 meter said minimal residence time is about 2 sec. in the ambient atmosphere (at a hollow fiber production rate of 30 m) before the hollow fiber extrudate is introduced into the wash bath. After this residence time the hollow fiber

extrudate is completely formed from inside, i.e. the hollow fiber extrudate will not be effected by the wash bath. Consequently, there will be formed no outer barrier layer, which will be the case if the residence time under the given conditions is too short.

Examples of polymers for said polymer solution may be the polymers mentioned above, and examples of suitable solvents may be DMSO, DMF, DMAc or similar polar, non-protonic organic solvents. Water may be used as said center liquid, preferably deionized water.

The polymer solution viscosity is generally from 100 to 3,000 mPa· s preferably 300 mPa· s, as measured at 20°C.

The invention will be further illustrated by the following non-restricting examples.

Example 1

11% of a polyamide was dissolved in DMSO at room temperature, and the solution was filtered and degassed. The polymer solution viscosity was 300 mPa· s.

The polymer solution (126 ml/h) was extruded with ion-free water as a center liquid (88 ml/h) through an annular die to form a hollow fiber extrudate having an inner diameter of 250 µm and an outer diameter of 400 µm. After passing a height of fall (1 meter) through the ambient atmosphere the hollow fiber extrudate was introduced in a first wash bath and consecutively through following wash baths of different temperatures with different residence times, until the solvent had been completely washed out.

The obtained hollow fiber according to this example has the following characteristics:

Hydraulic permeability (20°C):

$4 \times 10^{-4}$ ml/ × cm$^2$ × kPa.

Retention capability for Ov-albumin ($M_4$ 44,000): 98%

Retention capability for human albumin ($M_4$ 68,000): 100%.

Example 2

The same process conditions as in Example 1 were used. The dimensions of the hollow fiber were varied by varying the volume rate of center liquid (64 ml/h) and polymer solution (110 ml/h). The inner diameter of the hollow fiber was 220 µm and the outer diameter was 370 µm.

The obtained hollow fiber had the following characteristics:

Hydraulic permeability (20°C):

$2 \times 10^{-4}$ ml/s × cm$^2$ × kPa.

Retention capability for Ov-albumin ($M_4$ 44,000): 98%

Retention capability for human albumin ($M_4$ 68,000): 100%.

When used in a hemofilter having an effective membrane surface area of 1.16 m$^2$ and an effective hollow fiber length of 25 cm, this hollow fiber had a filtration performance for blood (25% Hct, 70 mg/1 total albumin, 37°C) of 120 ml/min. The blood flow rate was 350 ml/min.

When used as an infusion solution filter having a surface area of 0.1 m$^2$ and an effective hollow fiber length of 10 cm, this hollow fiber filtered 300 ml/min of infusion solution at a transmembrane pressure of about 27 kPa. When the filtered infusion solution contained 1,000 ng/1 endotoxins, no endotoxins could be detected in the filtrate. Detectable limit 0.05 ng/1. Examples of such tested endotoxins are E-Coliendotoxin and Lysate IGQ having molecular weights of between 50,000 and $1 \times 10^6$ Daltons.

Industrial Applicability

The present filtration membrane is particularly though not exclusively, adapted for use in hemofiltration. In general, the membrane can be used in any other filtration procedures requiring high flow-through rates, such as for example filtration of infusion solutions. More in general, the membrane can be used in applications requiring that the membrane fulfils the following critera: non-toxicity, blood compatibility, low tendency for the adsorption of proteins, sharp cut-off, high filtration rates and physical stability.

**Claims**

1. Filtration membrane in the form of a hollow fiber and being made of a polyamide, characterized by having an ultrafiltration rate (permeability to water) of between $2 \times 10^{-4}$ and $5 \times 10^{-4}$ ml/s cm$^2$ kPa at 20°C and by being essentially impermeable to Ov-albumin ($M_w$ 44,000), the inner diameter to wall thickness ratio being within the range of from 220:75 to 280:75.

2. Membrane according to claim 1, characterized in that said polyamide has repeating units of the following chemical formula:

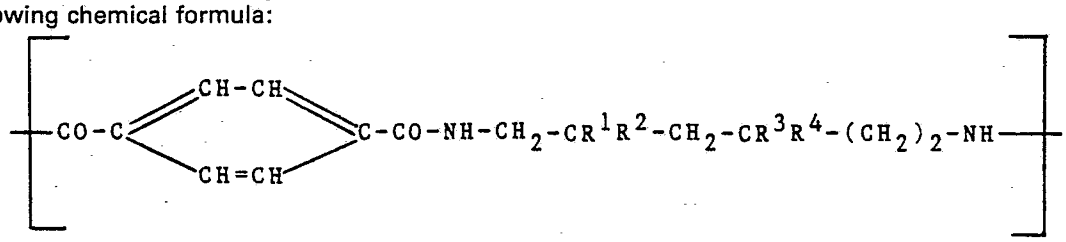

wherein $R^1$ is designating hydrogen and $R^2$, $R^3$ and $R^4$ each are designating a lower-alkyl group, or wherein $R^3$ is designating hydrogen and $R^1$, $R^2$ and $R^4$ each are designating a lower-alkyl group.

3. Membrane according to any of the preceding claims, characterized by having a wall thickness of from 40 to 100 µm and by having a cut-off of 30,000 Daltons.

4. Process for producing a filtration membrane in the form of a hollow fiber of a polyamide material according to any of claims 1—3, wherein a polymer solution of said polyamide is extruded with a center liquid to form a membrane extrudate which is then optionally washed, characterized in that said polymer solution has a viscosity from 100 to 3,000 mPa s preferably 300 mPa· s measured at 20°C, and in that said polymer solution is extruded under conditions such that the volume of polymer solutions to volume of center liquid ratio is within the range of 1.4—4.

5. Process according to claim 4, characterized in that said polymer solution is containing 5—20% of said polyamide dissolved in a polar non-protonic organic solvent.

6. Process according to claims 5, characterized in that said polyme solution is containing 11% of said polyamide.

7. Process according to any of the claims 4—6, characterized in that said polyamide has repeating units of the following chemical formula:

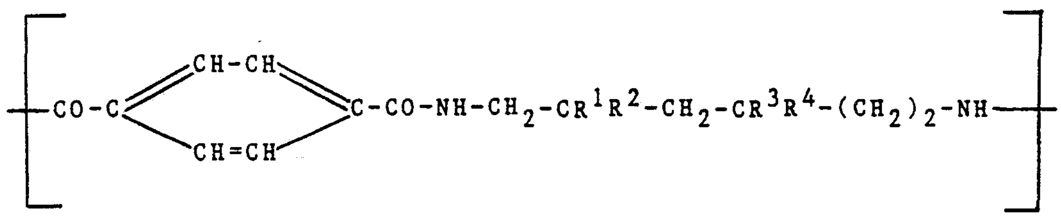

wherein $R^1$ is designating hydrogen and $R^2$, $R^3$ and $R^4$ are each designating a $(C_1—C_5)$alkyl group, preferably methyl, or wherein $R^3$ is designating hydrogen and $R^1$, $R^2$ and $R^4$ are each designating a $(C_1—C_5)$alkyl group, preferably methyl.

**Patentansprüche**

1. Filtrationsmembran in der Form einer Hohlfaser aus einem Polyamid, dadurch gekennzeichnet, daß sie eine Ultrafiltrationsgeschwindigkeit (Durchlässigkeit für Wasser) zwischen $2 \times 10^{-4}$ und $5 \times 10^{-4}$ ml/s × $cm^2$ × kPa bei 20°C hat und im wesentlichen undurchlässig für Ovalbumin (MG 44 000) ist, wobei das Verhältnis des Innendurchmessers zur Wanddicke im Bereich von 220:75 bis 280:75 liegt.

2. Membran nach Anspruch 1, dadurch gekennzeichnet, daß das Polyamid sich wiederholende Einheiten der folgenden chemischen Formel hat:

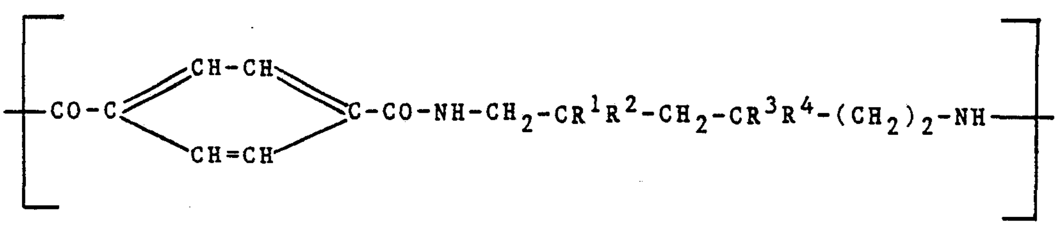

worin $R^1$ Wasserstoff bedeutet und $R^2$, $R^3$ und $R^4$ jeweils eine niedermolekulare Alkylgruppe bedeuten oder worin $R^3$ Wasserstoff bedeutet und $R^1$, $R^2$ und $R^4$ jeweils einer niedermolekulare Alkylgruppe bedeuten.

3. Membran nach einem der vorausgehenden Ansprüche, dadurch gekennzeichnet, daß sie eine Wanddicke von 40 bis 100 µm und eine Molekulargewichtsausschlußgrenze von 30 000 Dalton hat.

4. Verfahren zur Herstellung einer Filtrationsmembran in der Form einer Hohlfaser aus einem Polyamidmaterial nach einem der Ansprüche 1 bis 3, bei dem eine Polymerlösung des Polyamids mit einer mittigen Flüssigkeit unter Bildung eines Membranextrudats, das dann gegebenenfalls gewaschen wird, extrudiert wird, dadurch gekennzeichnet, daß die Polymerlösung eine Viskosität von 100 bis 3000 mPa· s, vorzugsweise von 300 mPa· s, gemessen bei 20°C, hat und daß die Polymerlösung unter solchen Bedingungen extrudiert wird, daß das Verhältnis des Volumens der Polymerlösung zum Volumen der mittigen Flüssigkeit im Bereich von 1,4 bis 4 liegt.

5. Verfahren nach Anspruch 4, dadurch gekennzeichnet, daß die Polymerlösung 5 bis 20% des in einem polaren nicht-protonischen organischen Lösungsmittel gelösten Polyamids enthält.

6. Verfahren nach Anspruch 5, dadurch gekennzeichnet, daß die Polymerlösung 11% des Polyamids enthält.

7. Verfahren nach einem der Ansprüche 4 bis 6, dadurch gekennzeichnet, daß das Polkyamid sich wiederholende Einheiten der folgenden chemischen Formel besitzt:

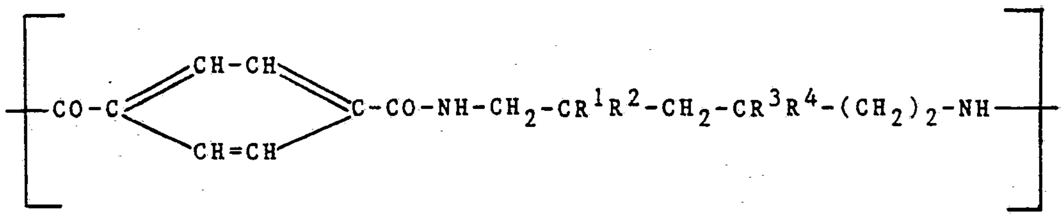

worin $R^1$ Wasserstoff bedeutet und $R^2$, $R^3$ und $R^4$ jeweils eine ($C_1$—$C_5$)-Alkylgruppe, vorzugsweise Methyl, bedeuten oder worin $R^3$ Wasserstoff bedeutet und $R^1$, $R^2$ und $R^4$ jeweils eine ($C_1$—$C_5$)-Alkylgruppe, vorzugsweise Methyl, bedeuten.

**Revendications**

1. Membrane filtrante sous forme d'une fibre creuse et faite d'un polyamide caractérisée en ce qu'elle a un taux d'ultrafiltration (perméabilité à l'eau) entre $2 \times 10^{-4}$ et $5 \times 10^{-4}$ ml/s.cm$^2$.kPa à 20°C et en ce qu'elle est essentiellement imperméable à l'ovalbumine (PM: 44,000), le rapport du diamètre intérieur à l'épaisseur de la paroi étant dans la gamme de 220/75 à 280/75.

2. Membrane selon la revendication 1, caractérisé en ce qu ledit polyamide a des motifs répétés répondant à la formule chimique suivante:

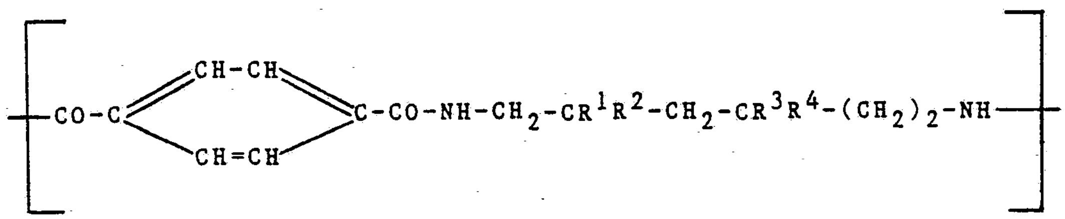

dans laquelle $R^1$ représente l'hydrogène et $R^2$, $R^3$ et $R^4$ représentent chacun un groupe alkyle inférieur, ou, $R^3$ représente l'hydrogène et $R^1$, $R^2$ et $R^4$ représentent chacun un groupe alkyle inférieur.

3. Membrane selon l'une quelconque des revendications précédentes, caractérisée en ce qu'elle a une épaisseur de la paroi de 40 à 100 µm et une limite de séparation de 30 000 daltons.

4. Procédé pour la fabrication d'une membrane de filtration sous forme de fibre creuse en polyamide selon l'une quelcoqnue des revendications 1 à 3, dans lequel on extrude une solution de polymère de polymère dudit polyamide avec un liquide central pour former un extrudat membranaire qu'on lave ensuite facultativement, caractérisé en ce que ladite solution de polymère a une viscosité mesurée à 20°C de 100 à 3000 mPa.s, de préférence de 300 mPa.s, et, en ce que ladite solution de polymère est extrudée dans des conditions telles que le rapport du volume de la solution de polymère au volume du liquide central soit situé dans la gamme de 1,4 à 4.

5. Procédé selon la revendication 4, caractérisé en ce que ladite solution de polymère contient 5 à 20% dudit polyamide dissous dans un solvant organique polaire aprotique.

6. Procédé selon la revendication 5, caractérisé en ce que ladite solution de polymère contient 11% dudit polyamide.

7. Procédé selon l'une quelconque des revendications 4 à 6, caractérisé en ce que ledit polyamide a des motifs répétés répondant à la formule chimique suivante:

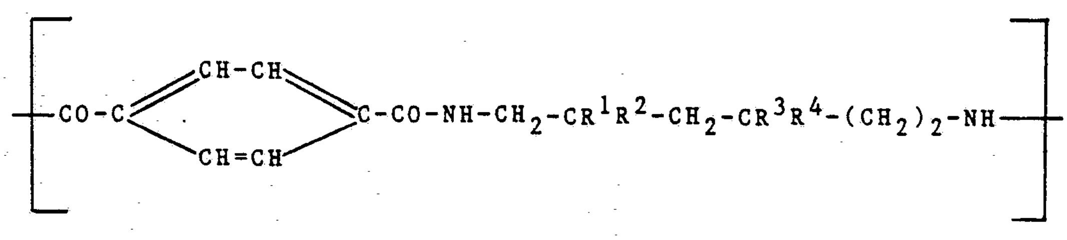

dans laquelle $R^1$ représente l'hydrogène et $R^2$, $R^3$ et $R^4$ sont chacun un groupe alkyle en $C_1$—$C_5$, de préférence le groupe méthyle, ou $R^3$ représente l'hydrogène et $R^1$, $R^2$ et $R^4$ représentent chacun un groupe alkyle en $C_1$—$C_5$ de préférence le groupe méthyle.

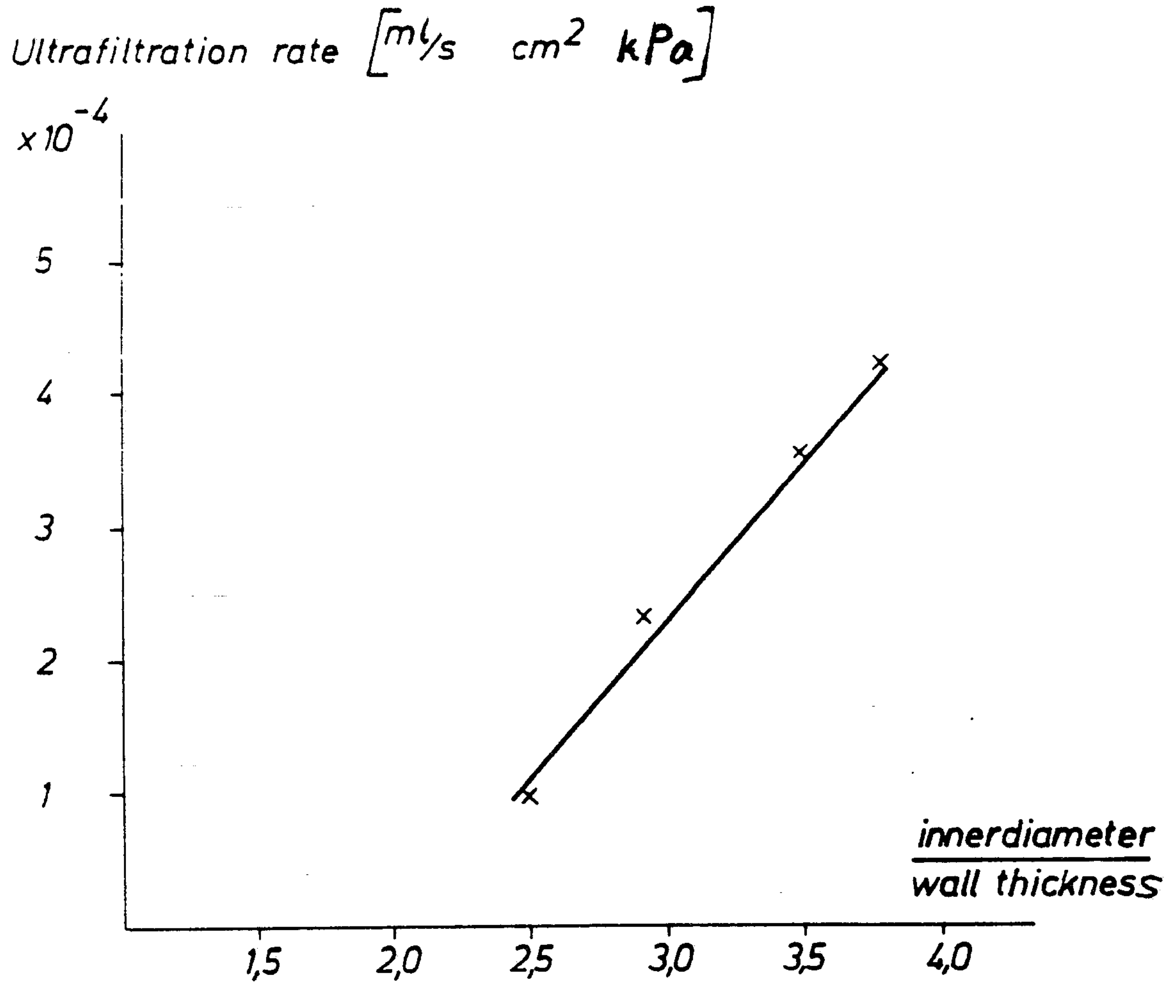
Ultrafiltration rate [ml/s cm2 kPa]
x 10-4
5
4
3
2
1
innerdiameter
wall thickness
1,5
2,0
2,5
3,0
3,5
4,0